# EUROPÄISCHE PATENTSCHRIFT

(11) **EP 3 091 268 B1**
(45) Veröffentlichungstag und Bekanntmachung des Hinweises auf die Patenterteilung: **28.08.2019**
(21) Anmeldenummer: 16167060.9
(22) Anmeldetag: 26.04.2016
(51) Int. Cl.: F16M 7/00

(54) **VORRICHTUNG ZUM AUSRICHTEN VON MOTOREN, MASCHINEN UND TEILEN VON MASCHINEN**
DEVICE FOR ALIGNING MOTORS, MACHINES AND PARTS OF MACHINES
DISPOSITIF D'ALIGNEMENT DE MOTEURS, DE MACHINES ET DE PIECES DE MACHINES

(30) Priorität: 08.05.2015 DE 102015107212
(43) Veröffentlichungstag der Anmeldung: 09.11.2016
(73) Patentinhaber: WASI GmbH, 42287 Wuppertal (DE)
(72) Erfinder: HAAG, Philipp, 50679 Köln (DE); KLUTH, Michael, 42553 Velbert (DE)
(74) Vertreter: Buse, Mentzel, Ludewig Patentanwaltskanzlei

(56) Entgegenhaltungen:
- WO-A1-03/036156
- DE-B- 1 154 678
- US-A- 2 004 238
- US-B1- 8 276 859

## Beschreibung

Die Erfindung betrifft eine Vorrichtung zum Ausrichten von Motoren und Maschinen sowie Maschinenteilen, zum Beispiel WO03/036156. Diese werden der Einfachheit halber im Weiteren als "Maschinen" bezeichnet. Hierunter sind jedoch alle möglichen Maschinen und Maschinenelemente sowie Motoren zu versehen, die beispielsweise in industriellen Anlagen zum Einsatz kommen. Bei der Verwendung derartiger Maschinen ist es häufig äußerst wichtig, dass diese zu anderen Motoren, Maschinen und Maschinenteilen korrekt ausgerichtet sind. Wird beispielsweise ein Motor verwendet, um über eine Welle ein anderes Element anzutreiben, so hängt u.a. die Lebensdauer dieser Welle davon ab, wie genau der Motor und damit auch die Welle zu dem anderen Element ausgerichtet sind. Selbst geringe Ungenauigkeiten in der Ausrichtung können durch erhöhten Verschleiß zu erheblich verringerten Laufzeiten der Welle oder auch einzelner Maschinenteile und sonstiger Elemente führen. Der Erfindung dient dabei dazu, die Maschine an einem Maschinenfundament, Maschinengestell o.ä. zu befestigen, im Weiteren der Einfachheit halber meist als "Maschinenfundament" bezeichnet.

Die DE 32 09 886 beschreibt ein Richtelement zur Horizontalausrichtung von Maschinen. Hierbei wird durch die Anordnung verschiedener Teile und Schrägflächen eine Horizontalverstellung eines Maschinenfußes durch die Betätigung einer Stellschraube ermöglicht. Die so beschriebene Vorrichtung ist jedoch recht aufwendig in der Konstruktion und dadurch auch teuer in der Herstellung. Für verschieden große und schwere Maschinen müssen immer wieder neue Vorrichtungen konzipiert und konstruiert werden. Auch ist eine vertikale Feinausrichtung der Maschine mit dieser Vorrichtung nicht beschrieben.

Eine weitere Vorrichtung zur Horizontalausrichtung von Maschinen besitzt eine Platte mit zwei Ausrichtelementen, die einstückig mit der Platte ausgebildet und im 90°-Winkel zueinander angeordnet sind. Diese Ausrichtelemente werden von je einer Stellschraube durchgriffen, die dann für die Ausrichtung der Maschine in der Horizontalen sorgen kann. Diese Vorrichtung muss jedoch ebenfalls für jede Größe und Art von Maschine komplett neu konstruiert und hergestellt werden. Abhängig vom Gewicht der Maschinen, der Größe des Fußes und des vorhandenen Raumes in dem Bereich, in dem die Maschine aufgestellt werden soll, müssen so unterschiedlichste Vorrichtungen hergestellt bzw. vorrätig gehalten werden. Auch dies ist teuer und aufwendig.

Aufgabe der Erfindung ist es daher, die vorgenannten Nachteile und vermeiden und eine Vorrichtung zum Ausrichten von Motoren, Maschinen und Maschinenteilen zu konzipieren, die einfach und kostengünstig in der Herstellung, auch bei sehr unterschiedlichen Anwendungen ist. Diese Aufgabe wird durch die kennzeichnenden Merkmale von Anspruch 1 gelöst, denen folgende besondere Bedeutung zukommt.

Gemäß der Erfindung sind die Ausrichtelemente als Klemmblöcke ausgebildet, welche von der jeweiligen Stellschraube durchgriffen wird. Jeder der Klemmblöcke ist dabei an der Platte lösbar befestigbar. Zum einen ergibt sich so eine einfache und kostengünstige Konstruktion der Vorrichtung, welche aus wenigen Einzelteilen ausgebaut ist. Zum anderen ist die Vorrichtung als vorteilhafte Weiterbildung wie ein modulares System aufgebaut, welches mehrere Arten von Platten sowie mehrere Arten von Gewindestangen umfasst, jedoch nur eine Art von Ausrichtelementen. Die verwendeten Platten können dabei in Form und/oder Größe variieren, beispielsweise sind rechteckige oder quadratische Platten gut bei besonderes großen Füßen der Maschine, während runde Platten für kleinere und leichtere Maschinen und Maschinenfüße vorteilhaft sind. Die Längen der Gewindestangen können ebenfalls variieren. Wird die Vorrichtung nah über dem Fußboden befestigt und sollen damit kleinere Füße von Maschinen ausgerichtet und festgelegt werden, so kann man eine kürzere Gewindestange verwenden, als wenn man eine große schwere Maschine mit großen Füßen ausrichten will. Besonders vorteilhaft ist es hierbei nur die Länge der Gewindestange anzupassen und nicht deren Durchmesser, Dann kann jede Art von Gewindestange mit jeder Art von Platten zusammenwirken. Hierdurch ergeben sich somit Synergieeffekte, da nicht jede Vorrichtung einzeln konzipiert werden muss, sondern aus den bestehenden Einzelteilen zusammengebaut wird, je nach Anwendungsfall. Selbstverständlich können jedoch auch Gewindestangen mit unterschiedlichen Durchmessern Verwendung finden.

In einem bevorzugten Ausführungsbeispiel weist die Gewindestange an Ihrem oberen Ende einen Sechskantantrieb auf. Hierdurch lässt sich die Gewindestange auf einfache Art und Weise drehen und bewegen. Dies kann manuell oder auch durch ein elektrisch oder anders angetriebenes Werkzeug erfolgen.

Gemäß Anspruch 1, weist die Platte in ihrem Fundamentbereich ein Niveau-Ausgleichselement auf, durch welches die Platte in einer genauen Höhenausrichtung justierbar ist. Hierzu dient voreilhafterweise ein sehr feines Gewinde am Niveau-Ausgleichselement. Ein derartiges Gewinde kann beispielsweise eine Steigung von nur einem 1 mm aufweisen. Somit kann die Höhe der Platte auf zwei Hundertstel Millimeter genau erfolgen. Ein Niveau-Ausgleichselement, welches hierfür Verwendung finden kann, ist beispielsweise in der EP 0 543 046 B1 beschrieben. Hierbei handelt es sich jedoch lediglich um ein Beispiel. Selbstverständlich sind auch andere Niveau-Ausgleichselemente, die für derartige feine Einstellungen vorgesehen sind, für diesen Anwendungsfall einsetzbar.

Wird ein Feingewinde verwendet, ist es besonders vorteilhaft, ein Sicherungselement an diesem Gewinde vorzusehen, wie beispielsweise einen Sprengring. Hierdurch wird verhindert, dass sich beim Verstellen des Niveau-Ausgleichselements die beiden Gewindeteile während des Richtvorgangs voneinander versehentlich lösen. Das Sicherungselement verhindert somit, dass die Gewindeteile zu sehr gegeneinander verdreht werden.

Des Weiteren werden Ausgleichsmittel sowohl am Maschinenbereich als auch am Fundamentbereich vorgesehen. Diese dienen dem Ausgleich von Unebenheiten des Maschinenfundaments bzw. auch des Fußes der Maschine. Die Ausgleichsmittel werden als Kugelausgleichscheiben ausgebildet, wobei je eine Kugelscheibe und eine Kegelpfanne vorgesehen sind. Die Kugelscheibe ist hierbei derartig in der Kegelpfanne gelagert, dass sie nicht ohne Weiteres von dieser gelöst werden kann, sich aber innerhalb der Kegelpfanne bewegen, verdrehen und verkippen lässt, so dass Unebenheiten ausgeglichen werden und sich die anderen Bauteile eben bzw. gerade an das Ausgleichsmittel anschließen lassen. Auch am Fundamentbereich ist wenigstens eine Sechskantmutter vorgesehen, die die erfindungsgemäße Vorrichtung am Maschinenfundament in der gewünschten Position fixiert.

In einem besonders bevorzugten Ausführungsbeispiel kann ein Ausgleichsmittel, insbesondere die Kegelpfanne und die Kugelscheibe, in das Niveau-Ausgleichselement mit integriert sein, so dass sich eine gemeinsame Baueinheit ergibt. Diese ist dann wieder einfach zu montieren und kann Unebenheiten des Maschinenfundaments gegenüber der Platte ausgleichen. Weiter vorteilhaft ist es, die Klemmböcke der Ausrichtelemente an der Platte mit einer Schraubverbindung zu sichern. Hierzu können herkömmliche übliche Schrauben Verwendung finden, die durch den Klemmblock in die Platte geschraubt werden.

Weitere Vorteile und Ausführungsbeispiele der erfindungsgemäßen Vorrichtung ergeben sich aus der nachfolgenden Beschreibung, den Unteransprüchen sowie den Zeichnungen. In den Figuren ist die Erfindung in zwei Ausführungsbeispielen dargestellt. Es zeigen:
- Fig. 1:: die erfindungsgemäße Vorrichtung in einem ersten Ausführungsbeispiel in Seitenansicht,
- Fig. 2:: die Vorrichtung aus Fig. 1 perspektivischer Darstellung,
- Fig. 3:: die erfindungsgemäße Vorrichtung aus Fig. 1 und 2 in Draufsicht,
- Fig. 4:: ein zweites Ausführungsbeispiel der erfindungsgemäßen Vorrichtung in Seitenansicht,
- Fig. 5:: die Vorrichtung aus Fig. 4 in perspektivischer Darstellung,
- Fig. 6:: die erfindungsgemäße Vorrichtung aus den Fig. 4 und 5 in Draufsicht.

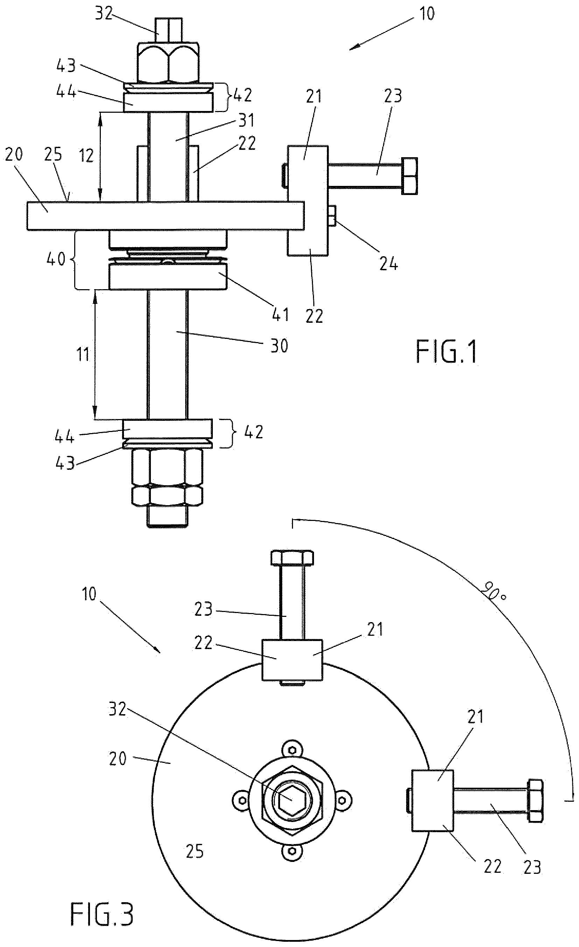

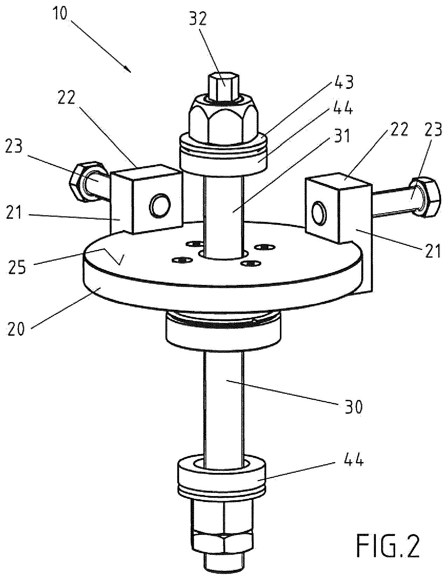

In den Fig. 1 bis 3 ist ein erstes Ausführungsbeispiel der erfindungsgemäßen Vorrichtung 10 gezeigt. Diese Vorrichtung 10 besitzt eine Platte 20, welche von einer Gewindestange 30 durchgriffen wird. Darüber hinaus sind zwei Klemmblöcke 22 vorgesehen, die jeweils von einer Stellschraube 23 durchgriffen werden. Diese dienen dabei als Ausrichtelemente 21. Insbesondere aus Fig. 3 erkennt man, dass die beiden Ausrichtelemente 21 in einem Winkel von 90° zueinander angeordnet sind. Hierdurch ist es möglich, den Fuß einer Maschine in der Plattenebene auf der Oberseite 25 der Platte 20 genau auszurichten. Der Fuß der Maschine wird dabei in den Maschinenbereich 12 auf der Oberseite 25 der Platte 20 eingebracht und von der Gewindestange 30 durchgriffen. Oberhalb des Maschinenfußes ist dann noch eine Kugelausgleichsscheibe 42 angeordnet, welche aus einer Kugelscheibe 43 und einer Kegelpfanne 44 besteht. Diese Kugelausgleichsscheibe 42 dient dem Ausgleich von Unebenheiten am Fuß der Maschine. So kann die oberhalb der Kugelausgleichsscheibe 42 angeordnete Sechskantmutter dazu dienen, den Fuß der Maschine im Maschinenbereich 12 in einer gewünschten Position zu fixieren, wobei Unebenheiten des Fußes dabei keine Rolle spielen und nicht zu einem Verkanten der Sechskantmutter führen.

Unterhalb der Platte 20 ist der Fundamentbereich 11 vorgesehen. In diesem Bereich wird die Vorrichtung 10 an einem Maschinenfundament, einem Maschinengestell oder Ähnlichem befestigt. Hierbei durchdringt die Gewindestange 30 dieses Maschinenfundament oder Ähnliches. Um die Gewindestange 30 dabei einfach durch eine Schraubbewegung am Maschinenfundament festzulegen, weist sie an ihrem oberen Ende 31 einen Sechskantantrieb 31 auf. Hierdurch ist es ergonomisch einfach, die Gewindestange 30 mittels seiner Schraubbewegung zu befestigen und/oder zu lösen. Dies kann sowohl durch manuelle Werkzeuge als auch durch elektrisch oder anderweitig angetriebene Werkzeuge geschehen.

Um eventuelle Unebenheiten des Maschinenfundaments auszugleichen, ist unterhalb des Fundamentbereiches 11 wiederum eine Kugelausgleichscheibe 42 vorgesehen, welche auch hier aus Kugelscheibe 43 und Kegelpfanne 44 besteht. So können Unebenheiten des Maschinenfundaments ausgeglichen werden und die Gewindestange 30 trotzdem gerade und korrekt ausgerichtet montiert werden. Unterhalb, der Platte 20, ist dann noch ein Niveau-Ausgleichselement 40 angeordnet. Auch dieses verfügt hier wieder über Kugelscheibe 43 und Kegelpfanne 44, um Unebenheiten des Maschinenfundaments zur Platte 20 hin auszugleichen. Darüber hinaus ist noch ein sehr feines Gewinde am Niveau-Ausgleichselement 40 vorgesehen, welches eine sehr genau definierte Ausrichtung der Platte 20 und damit des Maschinenfußes in der Höhe ermöglicht.

Durch das Zusammenspiel des Niveau-Ausgleichselementes 40 und der beiden Ausrichtelemente 21 kann der Maschinenfuß in alle drei Dimensionen exakt ausgerichtet werden, um auch kleinste Ungenauigkeiten zu vermeiden.

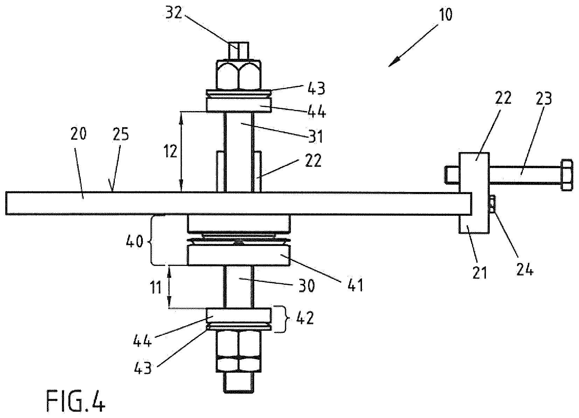

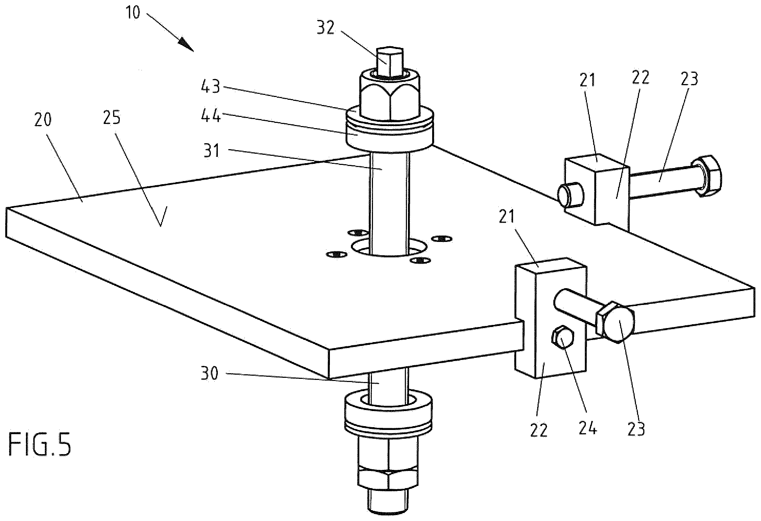

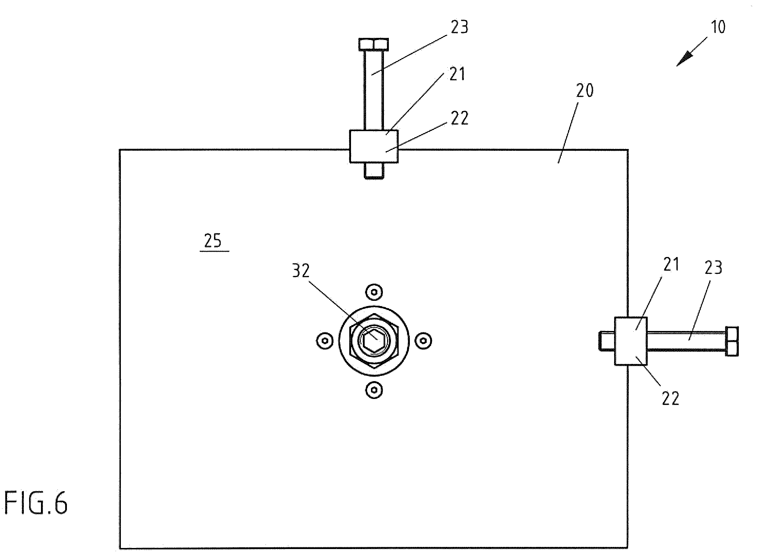

Die Fig. 4 bis 6 zeigen eine zweite Ausführungsform der erfindungsgemäßen Vorrichtung 10. Der Unterschied zur ersten Ausführungsform besteht darin, dass die Platte 20 nicht rund ausgebildet ist, sondern eine rechteckige Form aufweist. Dies ist besonders vorteilhaft bei größeren und schwereren Füßen von Maschinen. Selbstverständlich sind alle möglichen anderen Formen der Platte 20 vom Erfindungsumfang umfasst, wobei die genaue Form und Größe der Platte 20 jeweils vom konkreten Anwendungsfall abhängt.

Die Ausrichtelemente 21 werden durch eine Schraubverbindung 24 jeweils an der Platte 20 befestigt. Auch im zweiten Ausführungsbeispiel sind die Ausrichtelemente 21 in einem 90°-Winkel zueinander angeordnet, um eine einfachere Ausrichtung des Maschinenfußes auf der Oberseite 25 der Platte 20 zu verwirklichen.

Die beiden in den Ausführungsbeispielen verwendeten Gewindestangen 30 haben den gleichen Durchmesser, was besonders vorteilhaft ist, da dann eine einzige Art von Platten 20 für jede Länge und Art von Gewindestangen 30 eingesetzt werden kann. Selbstverständlich ist es auch möglich, Gewindestangen 30 mit unterschiedlichen Durchmessern vorzusehen.

Um ein Maschinenteil bzw. einen Motor mittels der Erfindung auszurichten, werden üblicherweise vier erfindungsgemäße Vorrichtungen 10 verwendet, nämlich an jedem Fuß eine. Es ist natürlich auch möglich, unterschiedliche Anzahlen von Vorrichtungen 10 zu verwenden.

Abschließend sei noch darauf hingewiesen, dass die hier dargestellten Ausführungsformen lediglich beispielshafte Verwirklichungen der Erfindung sind. Diese ist nicht darauf beschränkt. Es sind noch Abänderungen und Abwandlungen möglich.

### Bezugszeichenliste:

- 10: Vorrichtung
- 11: Fundamentbereich
- 12: Maschinenbereich
- 20: Platte
- 21: Ausrichtelement
- 22: Klemmblock
- 23: Stellschraube
- 24: Schraubverbindung
- 25: Oberseite von 20
- 30: Gewindestange
- 31: Oberes Ende von 30
- 32: Sechskantantrieb
- 40: Niveau-Ausgleichselement
- 41: Ausgleichsmittel
- 42: Kugelausgleichscheibe
- 43: Kugelscheibe
- 44: Kegelpfanne

## Patentansprüche

1. Vorrichtung (10) zum Ausrichten von Motoren, Maschinen und Teilen von Maschinen,
mit wenigstens einer Platte (20), unterhalb derer sich ein Fundamentbereich (11) befindet, mittels dessen die Platte (20) auf einem Maschinenfundament, einem Maschinengestell oder ähnlichem höhenverstellbar anordbar ist
und welche auf ihrer Oberseite (25) einen Maschinenbereich (12) aufweist, wobei auf der Platte (20) im Maschinenbereich (12) ein Fuß einer Maschine platzierbar ist,
wobei die Platte (20) von einer Gewindestange (30) durchsetzt ist, welche in den Maschinenbereich (12) und den Fundamentbereich (11) hineinragt und mittels welcher die Platte (20) am Maschinenfundament o.ä. befestigbar ist und welche gleichzeitig dazu dient, den Fuß an der Platte (20) in einer definierten Position festzulegen,
wobei an der Platte (20) in ihrem Maschinenbereich (12) wenigstens zwei Ausrichtelemente (21) vorgesehen sind, welche von je einer Stellschraube (23) durchgriffen werden,
wobei durch die Stellschrauben (23) die Ausrichtung der Maschine in einer Ebene realisierbar ist,
und jedes der Ausrichtelemente (21) einen Klemmblock (22) aufweist, welcher an der Platte (20) lösbar befestigbar ist und welcher von der jeweiligen Stellschraube (23) durchgriffen wird
**dadurch gekennzeichnet,**
dassan der Platte (20) in ihrem Fundamentbereich (11) ein Niveau-Ausgleichselement (40) vorgesehen ist, durch welches die Platte (20) in einer genauen Höhenausrichtung justierbar ist, insbesondere durch ein sehr feines Gewinde (Feingewinde) am Niveau-Ausgleichselement (40)
und dass die Vorrichtung (10) ein oder mehrere Ausgleichsmittel (41) am Fundamentbereich (11) oder am Maschinenbereich (12) und am Fundamentbereich (11) zum Ausgleich von Unebenheiten des Maschinenfundaments und/oder des Fußes aufweist, nämlich jeweils eine Kugelausgleichscheibe (42), die eine Kombination von Kegelpfanne (44) und Kugelscheibe (43) umfasst, wobei die Kugelscheibe (43) derart an der Kegelpfanne (44) gelagert ist, dass sie nicht ohne Weiteres von dieser gelöst werden kann, dass sich die Kugelscheibe (43) aber innerhalb der Kegelpfanne (44) bewegen lässt, um Unebenheiten auszugleichen.

2. Vorrichtung (10) nach Anspruch 1, **dadurch gekennzeichnet, dass** an dem Feingewinde ein Sicherungselement, wie ein Sprengring vorgesehen ist, damit sich die beiden Gewindeteile nicht ohne weiteres voneinander lösen lassen.

3. Vorrichtung (10) nach einem der Ansprüche 1 oder 2, **dadurch gekennzeichnet, dass** die Kegelpfanne (44) und die Kugelscheibe (43) mit in das Niveau-Ausgleichselement (40) als gemeinsame Baueinheit integriert sind.

4. Vorrichtung (10) nach einem der Ansprüche 1 bis 3, **dadurch gekennzeichnet, dass** die Vorrichtung (10) als modulares System aufgebaut ist, bei welchem mehrere Arten von Platten (20) vorgesehen sind, die sich durch die Größe und/oder die Form unterscheiden und mehrere Arten von Gewindestangen (30) vorgesehen sind, welche sich durch die Längen und/oder Durchmesser unterscheiden, während aber nur eine Art von Ausrichtelementen (21) vorgesehen ist.

5. Vorrichtung (10) nach einem der Ansprüche 1 bis 4, **dadurch gekennzeichnet, dass** die Gewindestange (30) an ihrem oberen Ende (31) einen Sechskantantrieb (32) aufweist.

6. Vorrichtung (10) nach einem der Ansprüche 1 bis 5, **dadurch gekennzeichnet, dass** die Klemmblöcke (22) an der Platte (20) mittels einer Schraubverbindung (24) sicherbar sind.

## Claims

1. Device (10) for aligning motors, machines and parts of machines,
with at least one plate (20), below which a foundation area (11) is located, by means of which the plate (20) can be arranged in a height-adjustable manner on a machine foundation, a machine frame or the like,
and which has a machine area (12) on its upper side (25), where a foot of a machine is placeable on the plate (20) in the machine area (12),
wherein the plate (20) is being penetrated by a threaded rod (30) that projects into the machine area (12) and the foundation area (11) and by means of which the plate (20) can be fastened to the machine foundation or the like and which simultaneously serves to fix the foot to the plate (20) in a defined position,
wherein at least two alignment elements (21) are being provided on the plate (20) in its machine area (12), which are each penetrated by an adjusting screw (23),
wherein the alignment of the machine in a plane can be realised by the adjusting screws (23),
and each of the alignment elements (21) has a clamping block (22) which can be releasably fastened to the plate (20) and through which the respective adjusting screw (23) passes,
**characterised in that**
a level compensating element (40) is provided on the plate (20) in its foundation area (11), by means of which the plate (20) can be adjusted in a precise height alignment, in particular by a very fine thread on the level compensating element (40)
and that the device (10) has one or more compensating means (41) on the foundation area (11) or on the machine area (12), and on the foundation area (11)
for compensating unevenness of the machine foundation and/or the foot, namely in each case a ball compensating disc (42) which comprises a combination of a conical cup (44) and a spherical washer (43), the spherical washer (43) being mounted on the conical cup (44) in such a way that it cannot easily be detached from the latter, but that the spherical washer (43) can be moved within the conical cup (44) in order to compensate for unevenness.

2. Device (10) according to claim 1, **characterised in that** a securing element, such as a snap ring, is provided on the fine thread so that the two threaded parts cannot be easily detached from one another.

3. Device (10) according to one of claims 1 or 2, **characterised in that** the conical cup (44) and the spherical washer (43) are integrated into the level compensating element (40) as a common structural unit.

4. Device (10) according to one of claims 1 to 3, **characterised in that** the device (10) is constructed as a modular system in which several types of plates (20) are provided that differ in size and/or shape and several types of threaded rods (30) are provided that differ in lengths and/or diameters, while only one type of alignment elements (21) is provided.

5. Device (10) according to one of claims 1 to 4, **characterised in that** the threaded rod (30) has a hexagonal drive (32) at its upper end (31).

6. Device (10) according to one of claims 1 to 5, **characterised in that** the clamping blocks (22) can be secured to the plate (20) by means of a screw connection (24).

## Revendications

1. Dispositif (10) d'alignement de moteurs, de machines et de pièces de machines,
comprenant au moins une plaque (20) en dessous de laquelle se trouve une zone de bâti (11) au moyen de laquelle la plaque (20) peut être disposée, de façon réglable en hauteur, sur un bâti machine, un châssis machine ou similaire
et qui sur son côté supérieur (25) présente une zone machine (12), sachant qu'un pied de la machine peut être placé sur la plaque (20) dans la zone machine (12),
sachant que la plaque (20) est traversée par une tige filetée (30) faisant saillie dans la zone machine (12) et la zone de bâti (11) et au moyen de laquelle il est possible de fixer la plaque (20) contre le bâti machine ou similaire, et qui sert en même temps à immobiliser le pied contre la plaque (20) sur une position définie,
sachant que contre la plaque (20), dans leur zone machine (12), au moins deux éléments d'alignement (21) sont prévus, chacun étant respectivement traversé par une vis d'ajustement (23),
sachant que les vis d'ajustement (23) permettent de réaliser un alignement de la machine sur un plan
et que chacun des éléments d'alignement (21) présente un bloc de bridage (22) pouvant être fixé de manière desserrable contre la plaque (20) et étant traversé par la vis d'ajustement (23) respective,
**caractérisé en ce que**
contre la plaque (20), dans sa zone de bâti (11), est prévu un élément d'égalisation (40) de niveau permettant d'ajuster la plaque (20) sur une hauteur d'alignement précise, en particulier grâce à un filetage très fin (filetage de précision) contre l'élément d'égalisation (40) de niveau
et **en ce que** le dispositif (10) présente un ou plusieurs moyens d'égalisation (41) contre la zone du bâti (11) ou dans la zone machine (12) et contre la zone du bâti (11),
pour compenser les défauts de planéité du bâti machine et/ou du pied, à savoir chaque fois une rondelle d'égalisation (42) sphérique comprenant une combinaison de rondelle à rotule concave (44) et de rondelle sphérique (43), sachant que la rondelle sphérique (43) est en appui contre la rondelle à rotule concave (44) de sorte à ne pas pouvoir l'en détacher sans autre formalité, mais que la rondelle sphérique (43) puisse se déplacer à l'intérieur de la rondelle à rotule concave (44) pour compenser les défauts de planéité.

2. Dispositif (10) selon la revendication 1, **caractérisé en ce que** contre le filetage de précision est prévu un élément de sécurisation tel qu'un circlip afin que les deux pièces filetées ne puissent pas se détacher l'une de l'autre sans autres formalité.

3. Dispositif (10) selon l'une des revendications 1 ou 2, **caractérisé en ce que** la rondelle à rotule concave (44) et la rondelle sphérique (43) sont intégrées avec l'élément d'égalisation (40) de niveau pour former une unité constructive conjointe.

4. Dispositif (10) selon l'une des revendications 1 à 3, **caractérisé en ce que** le dispositif (10) est conçu comme système modulaire dans lequel plusieurs types de plaques (20) sont prévues, qui diffèrent par leur taille et/ou leur forme et par plusieurs types de tiges filetées (30) qui diffèrent par leurs longueurs et/ou diamètres, tandis cependant que seul un type d'éléments d'alignement (21) est prévu.

5. Dispositif (10) selon l'une des revendications 1 à 4, **caractérisé en ce que** la tige filetée (30) présente en son extrémité supérieure (31) un embout hexagonal (32) d'entraînement.

6. Dispositif (10) selon l'une des revendications 1 à 5, **caractérisé en ce que** les blocs de bridage (22) peuvent être sécurisés contre la plaque (20) au moyen d'une jonction vissée (24).
